# EUROPEAN PATENT SPECIFICATION

(11) **EP 1 543 515 B1**
(45) Date of publication and mention of the grant of the patent: **13.09.2006**
(21) Application number: 03766532.0
(22) Date of filing: 08.07.2003
(51) Int. Cl.: G11B 17/04

(54) **DISC DRIVE APPARATUS**
PLATTENLAUFWERKVORRICHTUNG
APPAREIL A UNITE DE DISQUES

(30) Priority: 30.07.2002 EP 02078128
(43) Date of publication of application: 22.06.2005
(73) Proprietor: Koninklijke Philips Electronics N.V., 5621 BA Eindhoven (NL)
(72) Inventor: PENNING, Frank, C., NL-5656 AA Eindhoven (NL); GOOSSENS, Hendrik, J., NL-5656 AA Eindhoven (NL)
(74) Representative: van der Veer, Johannis Leendert
(86) International application number: PCT/IB2003/003059
(87) International publication number: WO 2004/013844

(56) References cited:
- EP-A- 0 356 984
- US-A- 5 473 585
- US-A- 5 572 383
- US-A- 5 572 498

## Description

The present invention relates in general to a disc drive apparatus for writing/reading information into/from an optical storage disc; hereinafter, such a disc drive apparatus will also be indicated as "optical disc drive".

As is commonly known, an optical storage disc comprises at least one track of storage space, either in the form of a continuous spiral or in the form of multiple concentric circles, where information may be stored. Optical discs may be of the read-only type, where information is recorded during manufacture, which data can only be read by a user. The optical storage disc may also be of a writable type, where information may be stored by a user. For writing information in the storage space of the optical storage disc, or for reading information from the disc, an optical disc drive comprises, on the one hand, means for receiving and rotating an optical disc, and on the other hand a displaceable optical head for scanning the storage track with an optical beam, typically a laser beam. Since the technology of optical discs in general, the way in which information can be stored in an optical disc, and the way in which optical data can be read from an optical disc are commonly known, it is not necessary here to describe this technology in more detail.

For receiving the optical disc, an optical disc drive usually comprises a carrier tray which is displaceable between a receiving position in which the tray is located outside a disc drive housing so that a user can place a disc, and a scanning position in which the disc is located inside said disc drive housing and can be rotated by the rotating means and accessed by the optical head.

For optically scanning the rotating disc, at least an objective lens of the optical head is fitted in a lens holder which is mounted on a slide which is movable in the radial direction of the optical disc. The slide may be of a linear type, which follows a straight line of displacement, or of a pivoting type, which follows a curved line of displacement.

For rotating the optical disc, an optical disc drive comprises a motor-driven hub which comprises an upper hub section and a lower hub section, the two hub sections being axially aligned and being movable towards each other in order to clamp a central portion of the optical disc between them. Usually, one hub section is fixed while the other hub section is axially movable. Usually, the movable hub section is arranged directly on the spindle axle of a spindle motor.

It is important that the optical disc is well-aligned with the drive spindle motor. In order to facilitate this alignment, optical discs comprise an axially centered hole, and at least one of said drive hub sections comprises a tapered extension, arranged axially centered on the hub surface facing the disc, fitting into said hole.

Optical discs and optical disc drives are standardized. This does not only apply to the coding protocols, but also to the dimensions of certain parts. For instance, a CD disc or DVD disc has an outer diameter of 12 cm, and its central hole has a diameter of 15 mm. The hub sections typically have a diameter in the order of about 25 mm. Also, the lens holder and slide have a certain physical size. This all adds up to the fact that a radially inner portion of an optical disc cannot be accessed by the disc drive optics; typically, this inaccessible inner portion of an optical disc has a diameter of the order of about 40 mm.

A recent development concerns a disc having smaller dimensions, typically having an outer diameter of the order of about 30 mm. In the context of the present invention, such a disc will hereinafter be indicated as "small disc", in contrast to the larger-sized conventional discs, which will hereinafter be indicated as "large disc". Disc drives for such small discs, hereinafter indicated as "small drive", will be much smaller than conventional disc drives, hereinafter indicated as "large drive", and may typically find application in small, handheld equipment such as, for example, mobile telephones, personal digital assistants, etc. Small drives may be designed as miniaturized version of large drives, or according to a completely new concept, and one or more new standards may develop.

It is highly desirable that small discs can also be handled by large drives. For instance, this will allow a user to read/write such a disc using his PC or disc-type video recorder. In order to allow for this feature, two important conditions must be met. First, the small discs should be backwards compatible with large drives; in other words, the format used for writing small discs should be (almost) the same as the format used for writing large discs, so that a large drive "understands" what is written by a small drive and vice versa. Second, the large drives should be physically capable of accessing the small discs.

The present invention specifically relates to this second condition. As explained above, large disc drives are not expected to access track diameters smaller than 40 mm, whereas small discs have an outer diameter of 30 mm. Thus, it should be clear that it is not possible for the rotating and scanning means for the handling of large discs to handle a small disc without special provisions being made.

It is a general objective of the present invention to solve this problem.

More particularly, it is an objective of the present invention to provide a disc drive that is physically capable of accessing large discs as well as small discs.

According to an important aspect of the present invention, a disc drive comprises first rotating means adapted for rotating large discs and second rotating means adapted for rotating small discs.

EP-A-0,275,600 describes a disc drive suitable for scanning discs of different types, i.e. audio discs and video discs, where the rotating means comprise a first motor-driven turntable for rotating first-type discs and a second turntable, which is movable and can be placed on the first turntable, for rotating second-type discs. This approach may offer a solution to the problem of holding different-type discs, but is not suitable for solving the problem underlying the present invention, because the tracks of the small discs are still in a disc zone inaccessible to the optics of the disc drive.

US-A-4,575,836 describes a disc drive suitable for scanning discs of different types, i.e. audio discs and video discs, where the rotating means comprise a first rotary driver for rotating first-type discs and a second rotary driver for rotating second-type discs. The first rotary driver comprises a set of a first turntable and a first drive motor. The second rotary driver comprises a set of a second turntable and a second drive motor. The first rotary driver and the second rotary driver are mounted on a movable holder, which is movable to bring selectively either the first rotary driver or the second rotary driver into a play position, the play position of the second rotary driver being identical to the play position of the first rotary driver. If the first rotary driver is in the play position, the first turntable is ready to receive video discs. If the second rotary driver is in the play position, the second turntable is ready to receive audio discs. Moving the holder is effected by a separate turning motor through a reduction gear.

All in all, the mechanism of this prior art disc drive is bulky, complicated, and expensive, and leads to an increase in weight of the disc drive.

Further, the approach taken by this publication is not suitable for solving the problem underlying the present invention. In fact, where the present invention is related to the problem of playing a large disc and a small disc, the publication addresses the problem of playing a large disc (audio disc; 12 cm) and an even larger disc (video disc; 20-30 cm). In both play situations, the size of the turntable combined with the size of the pickup results in an inaccessible disc zone larger than the size of the small discs (3 cm).

US-A-4,796,251 also describes a disc drive suitable for scanning discs of different types, i.e. audio discs and video discs. Similar to US-A-4,575,836, the rotating means comprise a first rotary driver for rotating first-type discs and a second rotary driver for rotating second-type discs. The first rotary driver comprises a set of a first turntable and a first drive motor. The second rotary driver comprises a set of a second turntable and a second drive motor. The first rotary driver is fixed and is always in its play position. The second rotary driver is movable between a rest position and a play position, which differs from the play position of the first rotary driver. If the disc drive is to play video discs, the second rotary driver is rotated into its rest position, which is a position such that the second turntable does not hinder the operation of the scanning means. If the disc drive is to play audio discs, the second rotary driver is rotated into its play position, wherein the second turntable is ready to receive audio discs. The play position of the second rotary driver is such that an audio disc will not touch the first turntable. The second rotary driver is moved by a separate motor through a reduction gear.

All in all, the mechanism of this prior art disc drive is also rather bulky, complicated, and expensive, and leads to an increase in weight of the disc drive, although to a lesser extent than US-A-4,575,836.

Further, similar to US-A-4,575,836, the approach taken by this publication is not suitable for solving the problem underlying the present invention. Again, where the present invention is related to the problem of playing a large disc (12 cm) and a small disc (3 cm), the publication addresses the problem of playing a large disc (audio disc; 12 cm) and an even larger disc (video disc; 20-30 cm). In both play situations, the size of the turntable combined with the size of the pickup results in an inaccessible disc zone larger than the size of the small discs (3 cm).

The present invention is based on the recognition that the prior art disc drives which are capable of handling discs of different sizes all suffer from a common problem, i.e. the fact that the movable optics slide and the one or more turntables are always located on the same side of the disc. Therefore, the movable slide will always meet the turntable and is never able to access tracks having a diameter smaller than (approximately) 40 mm.

Based on this recognition, the present invention overcomes the above-identified problem by providing a disc drive comprising disc-rotating means having clamping components arranged on one side of the disc only, opposite to the movable optics slide. Then, the optical sledge is free to access all disc surface parts from radius=0 to the outer radius, as it will not meet any component of the disc rotating means.

An apparatus as mentioned in the preamble of claim 1 is disclosed in US-A-5.572.383. In the apparatus of the document, a common motor drives a common rotary member having first clamping means for receiving and rotating the first type disc and having second clamping means for receiving and rotating the second type disc, these two clamping means being axially displaced with respect to each other. The housing of the apparatus has two entrance slits above each other for receiving the different types of discs. Further, the apparatus has two separate scanning means, i.e. first type scanning means for scanning of the first type disc and second type scanning means for scanning of the second type disc.

An apparatus according to the present invention is distinguished by the characterizing features of claim 1.

It is noted that the publication Patent Abstracts of Japan, relating to Japanese patent publication 04085773, discloses an optical disc with a magnetic hub with no projections. However, this concerns a conventional optical disc, not a small disc of 30 mm outer diameter.

These and other aspects, features and advantages of the present invention will be further explained by the following description of an optical disc drive according to the present invention with reference to the drawings, in which same reference numerals indicate same or similar parts, and in which:
figure 1 is a perspective view schematically illustrating a disc drive apparatus;
figures 2A-C are schematical cross-sections of an embodiment of the disc drive apparatus according to the present invention, illustrating subsequent steps in a loading operation of a large disc;
figures 3A-C are similar schematical cross-sections, illustrating subsequent steps in a loading operation of a small disc;
figure 4 schematically illustrates a micromotor for a small disc.

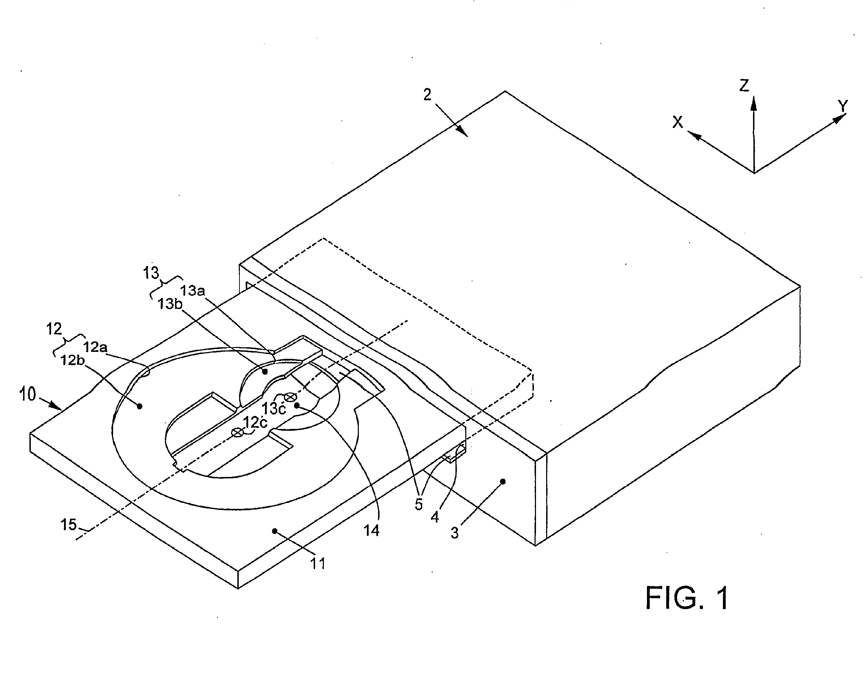

Figure 1 is a perspective view schematically illustrating a disc drive apparatus 1 comprising a housing 2 with a front panel 3. Usually, and as shown, the front panel 3 has a rectangular shape with a horizontal dimension larger than a vertical dimension, but this is not essential. For sake of convenience, the horizontal direction will hereinafter be indicated as X-direction, while the vertical direction will hereinafter be indicated as Z-direction. In the front panel 3, an opening 4 is formed, likewise having a rectangular shape although this is not essential, which opening 4 can be closed by a lid 5. Control buttons for operating the disc drive apparatus 1 are not shown for sake of simplicity.

The disc drive apparatus 1 further comprises a drawer-type carrier tray 10, which is displaceable in the Y-direction perpendicular to said X and Z directions. In a first extreme position, illustrated in figure 1, the lid 5 is opened and the carrier tray 10 partly extends through the opening 4. In this position, a user can place a disc on the carrier tray 10. This first extreme position will hereinafter also be indicated as loading position.

In a second extreme position, not illustrated in figure 1, the carrier tray 10 is withdrawn to a location inside the housing 2, and the lid 5 is closed. In this position, a disc placed on the carrier tray 10 can be played (i.e. read or written). This second extreme position will hereinafter also be indicated as play position.

It is noted that such drawer-type carrier tray 10 is known per se for a disc drive, as are means for guiding and means for driving the Y-movement of the carrier tray 10, while furthermore such guiding means and driving means are not a subject of the present invention and knowledge of their design and operation are not necessary for understanding the present invention. Therefore, such guiding means and driving means are not shown and will not be discussed in detail.

In a top surface 11 of the carrier tray 10, a first reception space 12 is formed as a recess with, in this case, a partly circular periphery 12a and a bottom 12b, for receiving a large disc (not shown). Similarly, a second reception space 13 is formed as a recess with, in this case, a partly circular periphery 13a and a bottom 13b, for receiving a small disc (not shown). The center of the first circular reception space 12 is indicated at 12c, and the center of the second circular reception space 13 is indicated at 13c. The two reception spaces 12 and 13 are aligned in the Y-direction, i.e. the centers 12c and 13c are located on a common line 15 parallel to the Y-direction.

Further, an opening 14 is formed in the carrier tray 10 having a sufficient extent in the Y-direction and X-direction and at least extending from the first center 12c through the second center 13c to the first periphery 12a, to allow rotating means and scanning means access to a disc placed on the carrier tray 10, as will be explained in more detail in the following.

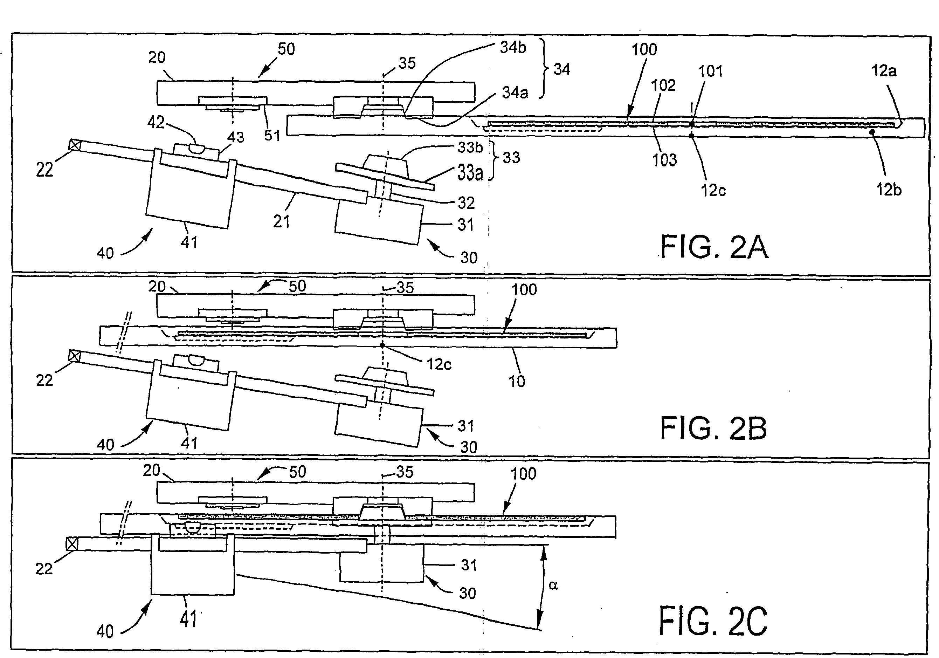

Figs. 2A-C are schematical cross-sections of the disc drive apparatus 1 taken on said line 15, schematically showing portions of some components of the disc drive apparatus 1. For the sake of simplicity, components which can be identical to prior art components, which are not necessary for understanding the present invention, and/or which are obvious to a person skilled in the art are not shown in these Figures.

A part of a frame of the disc drive apparatus 1 is shown at 20. The disc drive apparatus 1 further comprises a subframe 21, which is pivotably coupled to the frame 20 with respect to a horizontal pivot axis 22, which is directed parallel to the X-direction in this example.

The disc drive apparatus 1 comprises a first rotary drive device 30 for driving large discs. The first rotary drive device 30 comprises a spindle motor 31 with a spindle axle 32 and a motor hub 33 mounted on the spindle axle 32. The spindle motor 31 is mounted on said subframe 21. The first rotary drive device 30 further comprises a fixed hub 34 which is mounted fixedly (although with rotary freedom) to the apparatus frame 20. The motor hub 33 has a front face 33a and a tapered elevation 33b projecting therefrom. The fixed hub 34 has a front face 34a and a tapered recess 34b. A first rotation axis of the first rotary drive device 30 is indicated at 35.

It is noted that this rotation axis 35 extends according to the Z-direction. In the following, indications as "above" and "below" will be used with reference to the Z-direction, assuming that the apparatus is placed in its normal operating position as illustrated in Fig. 1.

The fixed hub 34 is mounted above a path followed by the movable carrier tray 10, and the subframe 21 with the spindle motor 31 and the motor hub 33 is mounted below said path. Fig. 2A illustrates a loading state of the disc drive apparatus 1, in which state the movable carrier tray 10 is in its loading position as illustrated in Fig. 1, i.e. extending outside the housing 2. In this loading state, the subframe 21 has been pivoted downwards through a sufficient angle α to allow the movable carrier tray 10 undisturbed passage between the motor hub 33 and the fixed hub 34.

Fig. 2A illustrates a large disc 100 placed in the first reception space 12 of the carrier tray 10. The disc 100 is shown resting on the bottom 12b of the first reception space 12. A central hole of the disc 100 is indicated at 101. Since the periphery 12a of the first reception space 12 corresponds to the outer diameter of the disc 100 (although with sufficient clearance), the central hole 101 of the disc 100 is substantially aligned with said center 12c of the first circular reception space 12. A top surface 102 may be provided with a label for identification. The bottom side 103 involves the side where information has been or can be recorded, and which is illuminated by a laser beam upon recording or read-out.

In response to an appropriate user command, the carrier tray 10 is drawn into the housing 2 towards its play position. In its travel from its loading position to its play position, the carrier tray 10 is not disturbed by the motor hub 33 and the fixed hub 34, as was noted above. Fig. 2B shows the carrier tray 10 having reached its play position. In this position, the center 12c of the first circular reception space 12, and hence the central hole 101 of the disc 100, are substantially aligned with said first rotation axis 35.

Subsequently, the subframe 21 is pivoted upwards in order to have the first rotary drive device 30 engage with the disc 100. Caused by the upwards movement of the subframe 21, the tapered elevation 33b of the motor hub 33 enters the central hole 101 of the disc 100, thus centering the disc 100, and enters the tapered recess 34b of the fixed hub 34. The front face 33a of the motor hub 33 lifts the disc 100 from the bottom 12b of the first reception space 12. Finally, an annular central portion of the disc 100 is firmly clamped between the front face 33a of the motor hub 33 and the front face 34a of the fixed hub 34. If the spindle motor 31 is energized now, the disc 100 will rotate along with this motor.

The subframe 21 also carries a slide 41 of optical scanning means 40, which further comprises an optical lens 42 mounted in a lens holder 43. The slide 41 can be moved along the subframe 21 in a direction parallel to the Y-direction, so that the optical lens 42 can be displaced radially with respect to the disc 100. As is shown in Fig. 2B, the optical lens 42 does not hinder the disc 100 when the subframe 21 is in its lower position. As is shown in Fig. 2C, the optical lens 42 is close to the lower surface 103 of the disc 100 when the subframe 21 is in its upper position. The large disc 100 can now be scanned for recording or read-out, as usual.

It is noted that such a displaceable slide is known per se for a disc drive, as are means for guiding and means for driving the Y-movement of the slide, while furthermore such guiding means and driving means are not a subject of the present invention and knowledge on their design and operation are not necessary for understanding the present invention. Therefore, such guiding means and driving means are not shown and will not be discussed in detail.

Further, it is noted that the slide can be moved between a first extreme position corresponding to the outer diameter of the large disc 100 (to the left-hand side in Fig. 2C), and a second extreme position which is defined by a stop (not shown), which stop is arranged such that the slide will not touch the motor 31 nor the motor hub 33a. Thus, as will be clear to a person skilled in the art, the size of the motor 31 and the motor hub 33a in combination with the size of the slide 41 defines an inaccessible portion of the disc 100. In the following, the travel path between said two extreme positions will be indicated as "radial range".

When the write or read operation has been completed and the disc 100 is to be ejected from the apparatus, the above-mentioned steps are repeated in reverse order. The subframe 21 is lowered, so that the motor hub 33 lowers the disc 100 until it rests again on the tray 10. The subframe 21 is lowered further, and the tray 10 is moved in the Y-direction towards its loading position illustrated in Fig. 2A. The user can now take the disc from the tray.

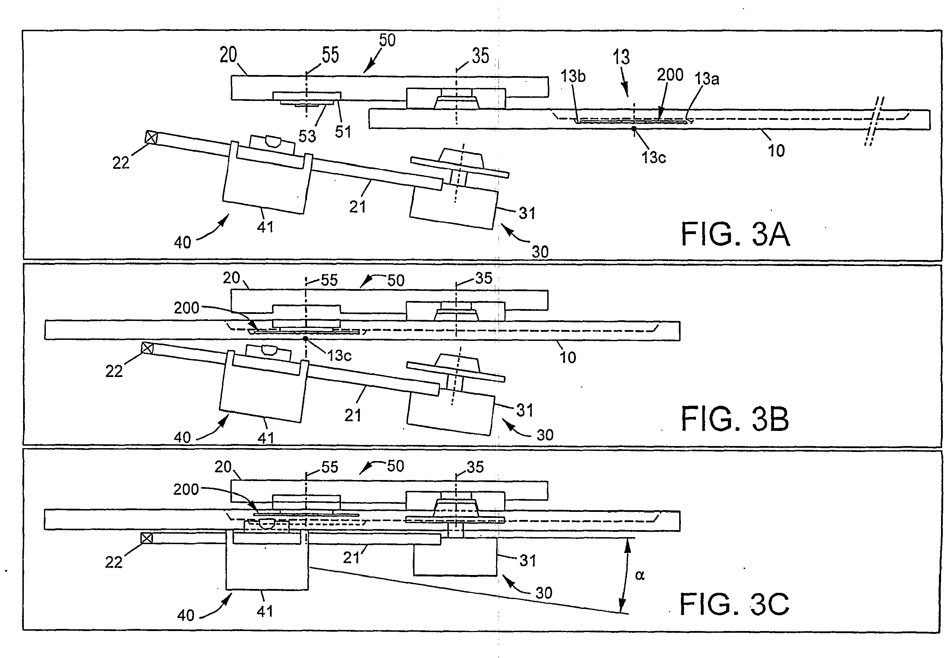

As is also shown in Figs. 2A-C, and as was explained in more detail with reference to Figs. 3A-C, the disc drive apparatus 1 further comprises a second rotary drive device 50 for driving small discs. The second rotary drive device 50 comprises a second motor 51 with a motor hub 53, the second motor 51 being mounted on said frame 20. A second rotation axis of the second rotary drive device 50 is indicated at 55. As is clearly shown in Figs. 2A-C and 3A-C, the second rotation axis 55 is at a distance from the first rotation axis 35 of the first rotary drive device 30.

The second motor 51 may be implemented as a spindle motor, like the first motor 31 mounted on the spindle axle 32. In order so save space, the second motor 51 preferably only has a very small axial dimension. Normally there is not much space above the disc in a disc drive housing.

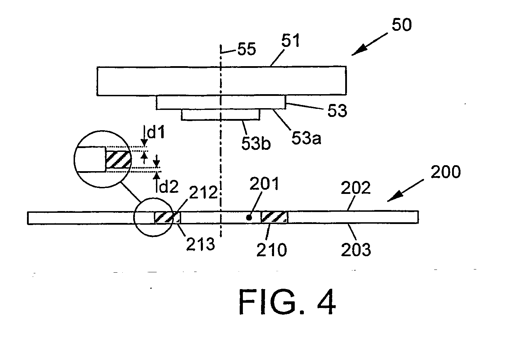

Fig. 4 illustrates the second motor 51 on a larger scale, together with a small disc 200 having a central hole 201. A top surface 202 may be provided with a label for identification. The bottom side 203 involves the side where information has been or can be recorded, and which is illuminated by a laser beam upon recording or read-out.

The second motor hub 53 has a front face 53a and a centering part 53b projecting therefrom, which may have a tapered edge (not shown). The centering part 53b has an outer diameter corresponding to the inner diameter of the central hole 201 of the small disc 200.

According to an important aspect of the present invention, the second motor hub 53 is adapted to hold the small disc 200 completely independently, i.e. without the need of additional clamping means such as a counter hub as used in the first rotary drive device 30. In a preferred embodiment, the second motor hub 53 is at least partly magnetic, for example by comprising a magnetic material or by comprising an electromagnet. Further, in this preferred embodiment, the small disc 200 is provided with an annular disc hub 210 around said hole 201, which is magnetically attractable, for example by at least partly comprising a magnetic material or a magnetizable material.

When the small disc 200 is held by the second motor hub 53, a top surface 212 of the annular disc hub 210 contacts the front face 53a of the second motor hub 53, and the centering part 53b of the second motor hub 53 extends into the central hole 201 of the disc 200. Preferably, the centering part 53b of the second motor hub 53 does not extend beyond a bottom surface 213 of the annular disc hub 210, i.e. the axial dimension of the centering part 53b of the second motor hub 53 is smaller than the axial dimension of the disc hub 210.

The top surface 212 of the disc hub 210 may be flush with the top surface 202 of the disc 200. However, in order to reduce the overall axial size as much as possible, the top surface 212 of the disc hub 210 preferably is recessed below the top surface 202 of the disc 200 over a small distance d1.

Preferably, the bottom surface 213 of the disc hub 210 does not project below the bottom surface 203 of the disc 200. In other words, the bottom surface 213 of the disc hub 210 preferably is flush with the bottom surface 203 of the disc 200, or is slightly recessed from the bottom surface 203 of the disc 200 over a small distance d2. However, it may be acceptable if the bottom surface 213 of the disc hub 210 slightly projects below the bottom surface 203 of the disc 200 over a small distance, as long as this distance is smaller than the operational distance between the bottom surface 203 of the disc 200 and any component of the optical system 40.

Preferably, the disc hub 210 is symmetrical so that the first distance d1 equals the second distance d2. Then the small disc 200 can also be used in an apparatus wherein a magnetic motor hub holds the disc hub 210 at its bottom surface 213.

When the motor hub 53 is rotated by the motor 51, the small disc 200 is caused to rotate by the frictional force exerted on the top disc hub surface 212 by the front face 53a of the motor hub 53. Normally, this frictional force is sufficient to rotate the disc 200 in a reliable manner. However, it is also possible to provide for an interlocking connection between said surfaces, if so desired, for example by providing small grooves and/or ridges on any or both of said surfaces.

With reference to Figs. 2A-C it is noted that the second motor 51 is mounted above said path followed by the movable carrier tray 10 in such a location that the carrier tray 10, in its travel from its loading position to its play position, is not disturbed by this second motor. Neither is the large disc 100 disturbed by this second motor when the large disc 100 is brought into its play position.

The operation of the disc drive apparatus 1 as regards small discs 200 will now be explained in more detail with reference to Figs. 3A-C.

Similar to Fig. 2A, Fig. 3A illustrates the loading state of the disc drive apparatus 1. The subframe 21 is in its downwards pivoted position. In contrast to Fig. 2A, Fig. 3A illustrates a small disc 200 placed in the second reception space 13 of the carrier tray 10. The disc 200 is shown resting on the bottom 13b of the second reception space 13. Since the periphery 13a of the second reception space 13 corresponds to the outer diameter of the disc 200 (although with sufficient clearance), the central hole 201 of the disc 200 is substantially aligned with said center 13c of the second circular reception space 13.

In response to an appropriate user command, the carrier tray 10 is drawn into the housing 2 towards its play position. In its travel from its loading position to its play position, the carrier tray 10 is not disturbed by the motor hub 33 and the fixed hub 34, as was noted above. Also, the small disc 200 resting on the bottom 13b of the second reception space 13 is not disturbed by the fixed hub 34 of the first rotary drive device 30. Fig. 3B shows the carrier tray 10 having reached its play position. In this position, the center 13c of the second circular reception space 13, and hence the central hole 201 of the small disc 200, are substantially aligned with said second rotation axis 55 of the second rotary drive device 50.

The small disc 200 is now picked up by the second motor hub 53. For this purpose, the disc drive apparatus 1 is provided with a mechanism adapted to bring the small disc 200 and the second motor hub 53 together. In the embodiment illustrated in Figs. 3A-C, the second motor 51 is mounted so as to be axially displaceable with respect to the frame 20, and said mechanism comprises means for axially displacing the second motor 51, or at least its hub 53, downwards towards the small disc 200 resting on the bottom 13b of the second reception space 13, until the annular disc hub 210 of the small disc 200 is magnetically attracted against the motor hub 53. This position of the second motor 51 will be indicated as pick-up position. Then, the second motor 51 is lifted again towards its rest position, lifting the disc 200 from the bottom 13b of the second circular reception space 13. Fig. 3B shows the second motor 51 holding the disc 200 in a position between said pick-up position and said rest position.

Subsequently, the subframe 21 is pivoted upwards, as was explained above with reference to Figs. 2A-C, thus lifting the slide 41 into its scanning position. As illustrated in Fig. 3C, the optical lens 42 of the optical scanning means 40 is now close to the lower surface 203 of the small disc 200, and the small disc 200 can now be scanned for recording or read-out.

In this respect it is noted that, during such scanning, a large disc 100 is held in a first play position (Fig. 2C), whereas a small disc 200 is held in a second play position (Fig. 3C) different from the first play position. Each play position can be defined in terms of a rotation axis and a playing plane, which is a plane coinciding with the bottom surface 103, 203 of the corresponding disc 100, 200 when it is in its play position. Now, the second rotation axis 55 of the second play position is displaced with respect to the first rotation axis 35 of the first play position. However, the second playing plane of the second play position substantially coincides with the first playing plane of the first play position. It is not necessary for the second playing plane to coincides exactly with the first playing plane, as small deviations can easily be overcome by the axial servo system of the optical system 40. In any case, the small disc 200 can be scanned by the optical system 40 without any modification to the optical system 40 being necessary. As far as the optical system 40 is concerned, it does not matter whether a large disc 100 or a small disc 200 is loaded: it just sees an optical record layer.

According to an important feature of the present invention, the second motor 51 is located opposite the slide 41. In other words, with respect to the small disc 200 in its play position (Fig. 3C), the second motor 51 and the slide 41 are located on opposite sides of the disc 200, the slide 41 facing the lower disc surface 203 which is to be irradiated by the scan beam, and the second hub 53 of the second motor 51 facing the upper disc surface 202 which may carry a label. This is in contrast to the first motor 31 of the first rotary drive device 30, which is located adjacent the slide 41, i.e. on the same side of the disc 100. According to a further important feature of the present invention, the second rotary drive device 50 is free from additional clamping members on the side of the lower disc surface 203, which might obstruct the slide 41. Thanks to these inventive features, the entire lower disc surface 203 is accessible to the optical scanning means 40. It is further noted that the radial range of the slide 41 fully covers the range between the second rotation axis 55 and the outer periphery of the small disc 200.

Thus, the present invention succeeds in providing a disc drive apparatus capable of reading/writing discs of different sizes. This disc drive apparatus comprises a first rotary drive device 30 for holding and rotating a first-type disc 100 in a first play position, and scanning means 40 for scanning a surface 103 of the rotating first-type disc 100 in its play position. The disc drive apparatus 1 further comprises a second rotary drive device 50, arranged opposite the scanning means 40, for holding and rotating a second-type disc 200 in a second play position. Said scanning means 40 are also capable of scanning a surface 203 of the rotating second-type disc 200 in its play position.

It should be clear to a person skilled in the art that the present invention is not limited to the exemplary embodiments discussed above, but that various variations and modifications are possible within the protective scope of the invention as defined in the appending claims.

For example, although the invention has been described and explained in the context of optical discs, the principles of the present invention are also applicable in the context of different storage types, for example magnetic discs.

Further, although the invention has been described and explained for an apparatus where the slide 41 is mounted on a pivotable subframe 20 below the play positions of the discs and the second motor 51 is mounted to a frame above the play positions of the discs, it is also possible that the pivotable subframe 20 is arranged above the play positions of the discs, while it is also possible that the slide 41 is mounted to the fixed frame whereas the second motor 51 is mounted on the pivoting subframe.

It is noted that it is possible in principle to change the orientation of the first rotary drive device 30, such that the motor is located above the disc whereas the fixed hub is located below the disc. However, in that case the problem addressed by the present invention remains, in that the hub is in the way and prevents access to the small disc. Apart from that, the solution proposed by the present invention still applies.

Further, it is noted that, in case a large disc is loaded, an axial displacement of the second motor should be avoided since such might damage the disc. Therefore, an axial displacement drive system for the second motor may be provided with a sensor for detecting the presence of a large disc, for example an optical sensor, which may generate a displacement-inihibiting signal when a large disc is detected.

## Claims

1. Disc drive apparatus (1) capable of reading/writing discs (100; 200) of different sizes, comprising:
a first rotary drive device (30) for holding and rotating a first type disc (100) of a first size in a first play position;
a second rotary drive device (50) for holding and rotating a second type disc (200) of a second size in a second play position;
**characterized in that** the apparatus comprises common scanning means (40) for scanning a surface of the rotating first type disc (100) in its first play position and for scanning a surface of the rotating second type disc (200) in its second play position;
wherein, with reference to the second type disc (200) in its second play position, the common scanning means (40) are arranged at a first side of the disc and the second rotary drive device (50) is arranged at the opposite side of the disc.

2. Disc drive apparatus according to claim 1, wherein said first rotary drive device (30) defines a first rotation axis (35), and wherein said second rotary drive device (50) defines a second rotation axis (55) which is located at a distance from the first rotation axis (35) of the first rotary drive device (30).

3. Disc drive apparatus according to any of the previous claims, wherein said second rotary drive device (50) comprises a second motor (51) for engaging and driving a second motor hub (53), said second motor hub (53) being adapted to hold a disc (200) completely independently.

4. Disc drive apparatus according to claim 3, wherein said second motor hub (53) is at least partly magnetic, for example by comprising a magnetic material or by comprising an electromagnet.

5. Disc drive apparatus according to claim 3 or 4, wherein, in operation, a front face (53a) of said second motor hub (53) contacts an upper surface (202; 212) of said disc (200), said second rotary drive device (50) being free from additional clamping members on the side of the opposite lower disc surface (203; 213).

6. Disc drive apparatus according to any of the previous claims 3 to 5, wherein at least said second motor hub (53) is axially displaceable between a rest position and a pickup position.

7. Disc drive apparatus according to any of the previous claims 3 to 6, wherein said second motor hub (53) has a front face (53a) and a centering part (53b) projecting therefrom, said centering part (53b) having an outer diameter corresponding to the inner diameter of the central hole (201) of a small disc (200), and said centering part (53b) preferably having an axial dimension smaller than an axial dimension of a disc hub (210).

8. Disc drive apparatus according to any of the previous claims, wherein said scanning means (40) comprise a slide (41) that is displaceably mounted on a subframe (21) which is pivotably connected to a frame (20) about a horizontal pivot axis (22).

9. Disc drive apparatus according to claim 8, wherein said first rotary drive device (30) comprises at least one hub (33) mounted on said subframe (21).

10. Disc drive apparatus according to claim 9, wherein said first rotary drive device (30) further comprises a spindle motor (31) mounted on said subframe (21) and a second hub (34) mounted on said frame (20), the first hub (33) being mounted on a spindle (32) of said spindle motor (31).

11. Disc drive apparatus according to any of the previous claims, further comprising a loading mechanism adapted to receive a disc (100; 200) in a loading position and bringing the disc into a play position, said loading mechanism comprising a carrier tray (10) capable of reciprocating between a loading position in which the tray (10) is located outside a disc drive housing (2) and a play position in which the tray (10) is located inside said disc drive housing.

12. Disc drive apparatus according to claim 11, wherein said carrier tray (10) comprises a first reception space (12) formed as a recess in a top surface (11) of the carrier tray (10), having a first center (12c);
wherein said carrier tray (10) further comprises a second reception space (13) formed as a recess in said top surface (11), having a second center (13c), the second reception space (13) having a diameter smaller than the diameter of the first reception space (12);
wherein said carrier tray (10) further has an opening (14) at least coinciding with said first center (12c) and said second center (13c).

13. Disc drive apparatus according to any of claims 11 to 12, wherein said carrier tray (10) is arranged below said second rotary drive device (50) and above said scanning means (40).

14. Disc drive apparatus according to any of the previous claims, adapted to execute the following steps in a disc loading operation:
- a first step of receiving a disc (200) on a carrier tray (10);
- a second step of displacing the carrier tray (10) to bring the disc (200) into a play position aligned with the second rotary drive device (50);
- a third step of picking up said disc (200) by a motor hub (53) of said second rotary drive device (50);
- a fourth step of lifting said disc (200) from said carrier tray (10);
- a fifth step of raising said scanning means (40) towards said disc (200).

15. Disc drive apparatus according to claim 14, wherein said third step comprises the step of axially lowering at least said motor hub (53) towards said disc (200) lying on said carrier tray (10);
and wherein said fourth step comprises the step of axially raising at least said motor hub (53) holding said disc (200).

16. Disc drive apparatus according to claim 15, wherein said third step comprises the step of magnetically attracting said disc (200) against a front face (53a) of said motor hub (53).

17. Record disc (200) having an outer diameter in the order of about 30 mm and provided with an annular disc hub (210) which is magnetically attractable, the disc having a first main surface (203) for facing a write/read pickup (40) and a second main surface (202) opposite said first main surface (203) for facing a front face (53a) of a motor hub (53) of a disc drive apparatus (1) according to any of claims 1-16;
wherein said annular disc hub (210) has a top surface (212) which is flush with said second main surface (202) of the disc (200) or, preferably, which is slightly recessed below said second main surface (202) of the disc (200) over a small distance d1.

18. Record disc according to claim 17, wherein said annular disc hub (210) has a bottom surface (213) which is flush with said first main surface (203) of the disc (200) or, preferably, which is slightly recessed from said first main surface (203) of the disc (200) over a small distance;
said annular disc hub (210) preferably being symmetrical so that said two distances are the same.

## Patentansprüche

1. Plattenlaufwerksgerät (1), das zum Lesen/Beschreiben von Platten (100; 200) unterschiedlicher Größen in der Lage ist und Folgendes umfasst:
eine erste Drehantriebseinrichtung (30) zum Halten und Drehen der Platte eines ersten Typs (100), die eine erste Größe aufweist, in einer ersten Spielposition,
eine zweite Drehantriebseinrichtung (50) zum Halten und Drehen der Platte eines zweiten Typs (200), das eine zweite Größe aufweist, in einer zweiten Spielposition,
**dadurch gekennzeichnet, dass** das Gerät gemeinsame Abtastmittel (40) zum Abtasten einer Oberfläche der rotierenden Platte des ersten Typs (100) in ihrer ersten Spielposition und zum Abtasten einer Oberfläche der rotierenden Platte des zweiten Typs (200) in ihrer zweiten Spielposition umfasst,
wobei die gemeinsamen Abtastmittel (40) in Bezug auf die Platte des zweiten Typs (200), in ihrer zweiten Spielposition an einer ersten Seite der Platte angeordnet sind und die zweite Drehantriebseinrichtung (50) auf der gegenüberliegenden Seite der Platte angeordnet ist.

2. Plattenlaufwerksgerät nach Anspruch 1, in dem die erste Drehantriebseinrichtung (30) eine erste Drehachse (35) definiert, und in dem die zweite Drehantriebseinrichtung (50) eine zweite Drehachse (55) definiert, das sich in einem Abstand von der ersten Drehachse (35) der ersten Drehantriebseinrichtung (30) befindet.

3. Plattenlaufwerksgerät nach einem der vorhergehenden Ansprüche, in dem die zweite Drehantriebseinrichtung (50) einen zweiten Motor (51) zum Eingreifen in eine zweite Motornabe (53) und Antreiben derselben umfasst und die zweite Motornabe (53) angepasst ist, um eine Platte (200) völlig selbstständig zu halten.

4. Plattenlaufwerksgerät nach Anspruch 3, in dem die zweite Motornabe (53) mindestens teilweise magnetisch ist, zum Beispiel **dadurch**, dass sie ein magnetisches Material oder einen Elektromagneten umfasst.

5. Plattenlaufwerksgerät nach Anspruch 3 oder 4, in dem während des Betriebs eine Vorderseite (53a) der zweiten Motornabe (53) eine obere Oberfläche (202; 212) der Platte (200) berührt, wobei die zweite Drehantriebseinrichtung (50) auf der Seite der gegenüberliegenden unteren Plattenoberfläche (203; 213) keine zusätzlichen Klemmelemente aufweist.

6. Plattenlaufwerksgerät nach einem der vorhergehenden Ansprüche 3 bis 5, in dem mindestens die zweite Motornabe (53) axial verlagerbar ist zwischen einer Ruheposition und einer Erfassungsposition.

7. Plattenlaufwerksgerät nach einem der vorhergehenden Ansprüche 3 bis 6, in dem die zweite Motornabe (53) eine Vorderseite (53a) und einen daraus hervorstehenden Zentrierteil (53b) hat, wobei der Zentrierteil (53b) einen Außendurchmesser hat, der dem Innendurchmesser des Mittellochs (201) einer kleinen Platte (200) entspricht, und der Mittelteil (53b) vorzugsweise eine kleinere Axialabmessung als eine Axialabmessung einer Plattennabe (210) hat.

8. Plattenlaufwerksgerät nach einem der vorhergehenden Ansprüche, in dem die Abtastmittel (40) eine Führung (41) umfassen, die verlagerbar an einem Hilfsrahmen (21) montiert ist, der um eine horizontale Schwenkachse (22) schwenkbar mit einem Rahmen (20) verbunden ist.

9. Plattenlaufwerksgerät nach Anspruch 8, in dem die erste Drehantriebseinrichtung (30) mindestens eine Nabe (33) umfasst, die an dem Hilfsrahmen (21) montiert ist.

10. Plattenlaufwerksgerät nach Anspruch 9, in dem die erste Drehantriebseinrichtung (30) ferner einen an dem Hilfsrahmen (21) montierten Spindelmotor (31) und eine zweite, am Rahmen (20) montierte Nabe (34) umfasst, wobei die erste Nabe (33) an einer Spindel (32) des Spindelmotors (31) montiert ist.

11. Plattenlaufwerksgerät nach einem der vorhergehenden Ansprüche, die ferner einen Lademechanismus umfasst, der angepasst ist, um in einer Ladeposition eine Platte (100; 200) aufzunehmen und die Platte in eine Spielposition zu bringen, wobei der Lademechanismus eine Schublade (10) umfasst, die sich hin- und herbewegen kann zwischen einer Ladeposition, in der sich die Schublade (10) außerhalb eines Plattenlaufwerksgehäuses (2) befindet, und einer Spielposition, in der sich die Schublade (10) innerhalb des Plattenlaufwerksgehäuses befindet.

12. Plattenlaufwerksgerät nach Anspruch 11, in dem die Schublade (10) einen ersten Aufnahmeraum (12) umfasst, der als eine Vertiefung in der oberen Oberfläche (11) der Schublade (10) ausgebildet ist und einen ersten Mittelpunkt (12c) hat,
in dem die Schublade (10) ferner einen zweiten Aufnahmeraum (13) umfasst, der als eine Vertiefung in der oberen Oberfläche (11) ausgebildet ist und einen zweiten Mittelpunkt (13c) hat, wobei der Durchmesser des zweiten Aufnahmeraums (13) kleiner ist als der Durchmesser des ersten Aufnahmeraums (12), und
in dem die Schublade (10) ferner eine Öffnung (14) hat, die sich mindestens mit dem ersten Mittelpunkt (12c) und dem zweiten Mittelpunkt (13c) deckt.

13. Plattenlaufwerksgerät nach einem der Ansprüche 11 bis 12, in dem die Schublade (10) unter der zweiten Drehantriebseinrichtung (50) und über den Abtastmitteln (40) angeordnet ist.

14. Plattenlaufwerksgerät nach einem der vorhergehenden Ansprüche, das angepasst ist, um bei einem Plattenladevorgang die folgenden Schritte auszuführen:
- einen ersten Schritt des Aufnehmens einer Platte (200) in eine Schublade (10),
- einen zweiten Schritt des Verschiebens der Schublade (10), um die Platte (200) in eine Spielposition zu bringen, die auf die zweite Drehantriebseinrichtung (50) ausgerichtet ist,
- einen dritten Schritt des Erfassens der Platte (200) durch eine Motornabe (53) der zweiten Drehantriebseinrichtung (50),
- einen vierten Schritt des Heraushebens der Platte (200) aus der Schublade (10),
- einen fünften Schritt des Anhebens der Abtastmittel (40) in Richtung der Platte (200).

15. Plattenlaufwerksgerät nach Anspruch 14, in dem der dritte Schritt den Schritt des axialen Absenkens von mindestens der Motornabe (53) in Richtung der Platte (200) umfasst, die auf der Schublade (10) liegt,
und in dem der vierte Schritt den Schritt des axialen Anhebens von mindestens der Motornabe (53) umfasst, die die Platte (200) hält.

16. Plattenlaufwerksgerät nach Anspruch 15, in dem der dritte Schritt den Schritt des magnetischen Anziehens der Platte (200) gegen eine Vorderseite (53a) der Motornabe (53) umfasst.

17. Aufzeichnungsplatte (200) mit einem Außendurchmesser in der Größenordnung von 30 mm, die mit einer ringförmigen Plattennabe (210) versehen ist, die magnetisch angezogen werden kann, wobei die Platte eine erste Hauptoberfläche (203) hat, die einem Schreib-/Lese-Abnehmer (40) zugewandt ist, und eine zweite Hauptoberfläche (202) gegenüber der ersten Hauptoberfläche (203), die einer Vorderseite (53a) einer Motornabe (53) eines Plattenlaufwerksgeräts (1) nach einem der Ansprüche 1 bis 16 zugewandt ist,
wobei die ringförmige Plattennabe (210) eine mit der zweiten Hauptoberfläche (202) der Platte (200) bündige obere Oberfläche (212) hat oder vorzugsweise geringfügig gegenüber der zweiten Hauptoberfläche (202) der Platte (200) um einen kleinen Abstand d1 vertieft ist.

18. Aufzeichnungsplatte nach Anspruch 17, in der die ringförmige Plattennabe (210) eine mit der ersten Hauptoberfläche (203) der Platte (200) bündige untere Oberfläche (213) hat oder vorzugsweise geringfügig gegenüber der ersten Hauptoberfläche (203) der Platte (200) um einen kleinen Abstand vertieft ist,
wobei die ringförmige Plattennabe (210) vorzugsweise symmetrisch ist, sodass die beiden Abstände identisch sind.

## Revendications

1. Appareil à unité de disques (1) capable de lire/écrire des disques (100 ;200) de différentes tailles, comprenant :
un premier dispositif d'entraînement rotatif (30) pour le maintien et la rotation d'un premier type de disque (100) d'une première taille dans une première position de marche ;
un deuxième dispositif d'entraînement rotatif (50) pour le maintien et la rotation d'un deuxième type de disque (200) d'une deuxième taille dans une deuxième position de marche ;
**caractérisé en ce que** l'appareil comprend des moyens de balayage communs (40) pour balayer une surface du premier type de disque tournant (100) dans sa première position de marche et pour balayer une surface du deuxième type de disque tournant (200) dans sa deuxième position de marche ;
dans lequel, relativement au deuxième type de disque (200) dans sa deuxième position de marche, les moyens communs de balayage (40) sont disposés du premier côté du disque et le deuxième dispositif d'entraînement rotatif (50) est disposée du côté opposé du disque.

2. Appareil à unité de disques selon la revendication 1, dans lequel ledit premier dispositif d'entraînement rotatif (30) définit un premier axe de rotation (35), et dans lequel ledit deuxième dispositif d'entraînement rotatif (50) définit un deuxième axe de rotation (55), qui est situé à une distance du premier axe de rotation (35) du premier dispositif d'entraînement rotatif (30).

3. Appareil à unité de disques selon l'une quelconque des revendications précédentes, dans lequel ledit deuxième dispositif d'entraînement rotatif (50) comprend un deuxième moteur (51) pour embrayer et entraîner un deuxième moyeu moteur (53), ledit deuxième moyeu moteur (53) étant adapté pour maintenir un disque (200) d'une façon entièrement indépendante.

4. Appareil à unité de disques selon la revendication 3, dans laquelle ledit moyeu moteur (53) est au moins partiellement magnétique, par exemple en comprenant un matériau magnétique ou en comprenant un électroaimant.

5. Appareil à unité de disques selon la revendication 3 ou 4, en ce que, en fonctionnement, une face frontale (53a) dudit second moyeu moteur (53) entre en contact avec une surface supérieure (202; 212) dudit disque (200), ledit deuxième dispositif d'entraînement rotatif (50) étant libre d'éléments additionnels de blocage sur la face de la surface opposée inférieure du disque (203; 213).

6. Appareil à unité de disques selon l'une quelconque des revendications précédentes 3 à 5, dans lequel au moins ledit deuxième moyeu moteur (53) est axialement déplaçable entre une position de logement et une position de prise.

7. Appareil à unité de disques selon l'une quelconque des revendications précédentes 3 à 6, dans lequel ledit deuxième moyeu moteur (53) a une face frontale (53a) et une pièce de centrage (53b) qui en ressort, ladite pièce de centrage (53b) ayant un diamètre extérieur correspondant au diamètre intérieur du trou central (201) d'un petit disque (200), et ladite pièce de centrage (53b) ayant de préférence une dimension axiale plus petite qu'une dimension axiale d'un moyeu de disque (210).

8. Appareil à unité de disques selon l'une quelconque des revendications précédentes, dans lequel ledit moyen de balayage (40) comprend une glissière (41) qui est montée sur un cadre auxiliaire (21) mobile qui est connecté à un cadre (20) de façon à pouvoir pivoter autour d'un axe de pivot horizontal (22).

9. Appareil à unité de disques selon la revendication 8, dans lequel ledit premier dispositif d'entraînement rotatif (30) comprend au moins un moyeu (33) monté sur ledit cadre auxiliaire (21).

10. Appareil à unité de disques selon la revendication 9, dans lequel ledit premier dispositif d'entraînement rotatif (30) comprend en outre un moteur à axe (31) monté sur ledit cadre auxiliaire (21) et un deuxième moyeu (34) monté sur ledit cadre (20), le premier moyeu (33) étant monté sur un axe (32) dudit moteur à axe (31).

11. Appareil à unité de disques selon l'une quelconque des revendications précédentes, comprenant en outre un mécanisme de chargement adapté pour recevoir un disque (100 ;200) dans une position de chargement et amenant le disque dans une position de marche, ledit mécanisme de chargement comprenant un tiroir de transport (10) capable d'alterner entre une position de chargement dans laquelle le tiroir (10) est situé à l'extérieur d'un boitier à unité de disques (2) et une position de marche dans laquelle le tiroir (10) est situé à l'intérieur dudit boitier à unité de disques.

12. Appareil à unité de disques selon la revendication 11, dans lequel ledit tiroir de transport (10) comprend un premier réceptacle (12) formé par un évidement dans la surface supérieure (11) du tiroir de transport (10), ayant un premier centre (12c); en ce que ledit tiroir de transport (10) comprend en outre un deuxième réceptacle (13) formé par un évidement dans ladite surface supérieure (11), ayant un deuxième centre (13c), le deuxième réceptacle (13) ayant un diamètre plus petit que le diamètre du premier réceptacle (12) ;
dans lequel ledit tiroir de transport (10) possède en outre une ouverture (14) coïncidant au moins avec ledit premier centre (12c) et ledit deuxième centre (13c).

13. Appareil à unité de disques selon l'une quelconque des revendications 11 et 12, dans lequel ledit tiroir de transport (10) est disposé en dessous dudit deuxième dispositif d'entraînement rotatif (50) et au dessus dudit moyen de balayage (40).

14. Appareil à unité de disques selon l'une quelconque des revendications précédentes, adapté en vue d'exécuter les étapes suivantes pendant une opération de chargement de disque :
- une première étape consistant à recevoir un disque (200) sur le tiroir de transport (10)
- une deuxième étape consistant à déplacer le tiroir de transport (10) en vue d'amener le disque (200) en position de marche alignée sur le deuxième dispositif d'entraînement rotatif (50) ;
- une troisième étape consistant à mettre en prise ledit disque (200) avec un moyeu moteur (53) dudit deuxième dispositif d'entraînement rotatif (50) ;
- une quatrième étape consistant à soulever ledit disque (200) dudit tiroir de transport (10) ;
- une cinquième étape consistant à lever ledit moyen de balayage (40) vers ledit disque (200).

15. Appareil à unité de disques selon la revendication 14 dans lequel ladite troisième étape comprend le pas consistant en un abaissement axial au moins dudit moyeu moteur (53) par rapport audit disque (200) posé sur ledit tiroir de transport (10); et en ce que ladite quatrième étape comprend le pas consistant en une élévation axiale au moins dudit moyeu moteur (53) maintenant ledit disque (200).

16. Appareil à unité de disques selon la revendication 15, dans lequel ladite troisième étape comprend le pas consistant à attirer magnétiquement ledit disque (200) contre une face frontale (53a) dudit moyeu moteur (53).

17. Disque d'enregistrement (200) ayant un diamètre extérieur de l'ordre de environ 30 mm et pourvu d'un moyeu annulaire de disque (210) qui est attirable magnétiquement, le disque ayant une première surface principale (203) pour faire face à un capteur d'écriture/lecture (40) et une deuxième surface principale (202) opposée à ladite première surface principale (203) pour faire face à une face frontale (53a) d'un moyeu moteur (53) d'un appareil à unité de disques (1) conforme à l'une quelconque des revendications 1-16 ;
dans lequel ledit moyeu de disque annulaire (210) a une surface supérieure (212) qui affleure ladite deuxième surface principale (202) du disque (200) ou, de préférence, qui est légèrement en retrait en-dessous de ladite deuxième surface principale (202) du disque (200) sur une petite distance d1.

18. Disque d'enregistrement selon la revendication 17, dans lequel ledit moyeu annulaire de disque (210) possède une surface inférieure (213) qui affleure ladite première surface principale (203) du disque (200) ou, de préférence, qui est légèrement en retrait de ladite première surface principale (203) du disque (200) sur une petite distance; ledit moyeu annulaire de disque (210) étant de préférence symétrique de telle façon que lesdites deux distances soient les mêmes.
